(19) **Europäisches Patentamt / European Patent Office / Office européen des brevets**

(11) **EP 2 205 671 B1**

(12) **EUROPEAN PATENT SPECIFICATION**

(45) Date of publication and mention
of the grant of the patent:
**22.06.2011 Bulletin 2011/25**

(51) Int Cl.:
*C08K 7/22* (2006.01)       *C09D 183/04* (2006.01)

(21) Application number: **09784010.2**

(22) Date of filing: **14.10.2009**

(86) International application number:
**PCT/EP2009/063419**

(87) International publication number:
**WO 2010/043653 (22.04.2010 Gazette 2010/16)**

(54) **STAIN RESISTANT PARTICLES**

FLECKENRESISTENTE PARTIKEL

PARTICULES ANTITACHE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **14.10.2008 EP 08166529**

(43) Date of publication of application:
**14.07.2010 Bulletin 2010/28**

(73) Proprietor: **DSM IP Assets B.V.**
**6411 TB Heerlen (NL)**

(72) Inventors:
 • **ARFSTEN, Nanning Joerg**
   **52074 Aachen (DE)**
 • **BUSKENS, Pascal Jozef Paul**
   **6411 DV Heerlen (NL)**

(74) Representative: **Kirk, Martin John**
**DSM Intellectual Property**
**P.O. Box 4**
**6100 AA Echt (NL)**

(56) References cited:
**WO-A2-2008/028640**

 • **WU G ET AL: "Properties of sol-gel derived
scratch-resistant nano-porous silica films by a
mixed atmosphere treatment" JOURNAL OF
NON-CRYSTALLINE SOLIDS, NORTH-HOLLAND
PHYSICS PUBLISHING. AMSTERDAM, NL, vol.
275, no. 3, 1 October 2000 (2000-10-01), pages
169-174, XP004208765 ISSN: 0022-3093 cited in
the application**
 • **BELLEVILLE P F ET AL: "Ammonia-hardening of
porous silica antireflective coatings"
PROCEEDINGS OF THE SPIE - THE
INTERNATIONAL SOCIETY FOR OPTICAL
ENGINEERING, SPIE, US, vol. 2288, 1 January
1994 (1994-01-01), pages 25-32, XP002509307
ISSN: 0277-786X**

**Description**

The present invention relates to stain resistant particles comprising a core and a shell and porous coatings comprising said particles. The invention further relates to a process for producing stable porous coatings and uses of such coatings, particularly as anti-reflective coatings,

The use of porous coatings for providing optical properties is known. Various optical functions can be achieved with such coatings. For example, an anti-reflective coating can be achieved by forming a porous coating with an effective refractive index lower than that of the substrate (US2,432,484). Typically these anti-reflective systems comprise a binder and nanoparticles. For example, US6.921,578 describes a method for preparing anti-reflective coating systems in which a binder (e.g. tetra-ethylorthosilicate TEOS) is hydrolyzed in the presence of the nanoparticles using an acid catalyst. While these approaches can lead to a coating with anti-reflective properties these coatings typically suffer from a number of drawbacks at a refractive index necessary to achieve between 1 and 2% rest reflection in the visible light spectrum. Typically, these coatings contain a large number of pores that are accessible to water and dirt. Furthermore, the surface of such coatings is relatively rough with roughness parameters (Ra, determined by atomic force microscopy) of about 100-150 nm which leads to high specific surface areas [H. R. Moulton, CA449110, 1948]. The "open pore structure" combined with high surface roughness leads to a high degree of optical fouling, water staining, difficulties in cleaning, and poor abrasion resistance.

Wu et al "Properties of sol-gel derived scratch resistant nano-porous silica films by a mixed atmospheric treatment", Journal of Non-Crystalline Solids, 275, (2000), pp 169-174, describes the treatment of the silica film with water and ammonia for 30 minutes at 400°C, resulting in a smoother surface and a densification of the silica structure. While the cleanability of these coatings may be improved due to an increase in surface smoothness, staining remains a problem.

Porous coatings, including anti-reflective coatings, are generally prone to staining. It is postulated that the porous network allows organic material and water to penetrate into the coating causing stains or blemishes. Removal of such marks is sometimes difficult and often incomplete. Water-staining can be particularly problematic and can even cause permanent marking of an anti-reflective coating with obvious implications for the efficacy of such a coating.

The object of the present invention is to address at least some of the above mentioned problems.

According to one aspect of the present invention, there is provided a particle having a core, which is hollow or comprises an organic polymer composition, and a shell comprising an inorganic oxide, wherein the shell has:

    a. a thickness in the range from 2 to 75 nm; and
    b. at least one and no more than five pores, each pore communicating between the core and an outer surface of the shell, and having a diameter of between 5 nm and 300 nm measured using an atomic force microscope, said pores being the largest pores of the particle.

Preferably, each pore diameter is in a range of between 10% and 60% of the particle diameter.

For readability, throughout the specification where appropriate, the term "enlarged pore" is used to denote a pore having a diameter of between 5 nm and 300 nm measured using an atomic force microscope, said pores being the largest pores of the particles.

Preferably, the enlarged pores represent no more than 60% of the theoretical surface area of the particle containing no pores (e.g. relative to the surface area of a sphere), more preferably no more than 50%, even more preferably no more than 40%, even more preferably no more than 30% and most preferably no more than 20%.

According to another aspect of the present invention, there is provided a coating having a coating surface comprising particles of the present invention, wherein a portion of the particles forms at least part of the surface coating. The coating surface preferably comprises a plurality of particles each of which protrude from a matrix comprising a binder. Within this embodiment, the surface coating is at least partly defined by segments of the particles which are exposed to the atmosphere. The proportion of each particle's surface area exposed to the atmosphere is preferably between 5 and 70%, more preferably 10 to 60% and even more preferably 20 to 50%.

Unexpectedly, the resulting coated surface which is often rougher and more porous compared to coating surfaces without the application of the steam curing step, at least substantially maintains its mechanical, optical properties and cleanability while enhancing its stain resistance.

The pore size is no greater than 300 nm. Preferably, the enlarged pore(s) has a diameter of no more than 200 nm, more preferably no more than 100 nm, even more preferably no more than 80 nm, yet even more preferably no more than 50 nm and more preferably no more than 40 nm. The enlarged pore(s) has a diameter of at least 5 nm, preferably at least 10 nm, more preferably at least 15 nm and yet more preferably at least 20 nm. Larger pore diameters are more prone to collect contamination and therefore more difficult to keep clean while smaller effective pores diameters retain moisture (or other stain producing contamination) such that stain resistance of the coating is lowered.

Preferably, at least 30%, more preferably 50%, even more preferably at least 70%, yet even more preferably at least 80% and most preferably at least 90% of the particles which form part of the coating surface comprise the enlarged pore (determined using AFM over a 2 $\mu$m x 2 $\mu$m surface area). The higher the proportion of particles exposed to the surface of the coating which contain the enlarged pore(s), the higher the proportion of water staining which can be eliminated from the coating.

Preferably, each particle which forms part of the surface of the coating comprises, on average greater than 0.3 and no more than 2.0 enlarged pores (determined using AFM over a 2 $\mu$m x 2 $\mu$m surface area).

The formation of the enlarged pores is thought to relate to the geometry of the particle, with enlarged pores not being observed through steam curing of flat surfaces.

In another embodiment of this aspect of the present invention, there is provided a coating composition comprising particles each having a core which is hollow and a shell, characterized in that:

(a) at least a portion of the particles have an average shell thickness in the range from 2 to 75 nm; and
(b) the coating composition is defined by the expression:

$R_u$ equals less than 2.8$R_0$ and $R_r$ equals less than 2.0$R_0$
where,
$R_0$ is the specular reflection at 550 nm of the coating composition applied to a substrate to form a coating having an average thickness of between 100 and 120 nm and stored at 25°C and 40% relative humidity under equilibrium conditions resulting in coated substrate $C_0$,
$R_u$ is the specular reflection at 550 nm of the coated substrate $C_0$ which is stored at 25°C and 90% relative humidity for 400 minutes resulting in coated substrate $C_1$; and
$R_r$ is the specular reflection at 550 nm of the coated substrate $C_1$ after being stored at 25°C and 40% relative humidity until equilibrium conditions are reached.

In another aspect of the present invention, there is provided a method for producing a substrate comprising the coating of the present invention comprising the steps of:

a. applying a coating composition comprising particles having a core and a shell to a substrate, said shell having a thickness in the range of 2 to 75nm; and
b. treating the coating surface with water vapour or a combination of water vapour and a base.

wherein said core comprises an organic polymer composition or is hollow and said shell comprises an inorganic oxide.

Surprisingly, the application of a steam treatment step (b) as defined above in the present invention results in the creation of a particle having at least one and no more than five enlarged pore having an effective diameter of between 5 nm and 300 nm leading to a more open surface.

Preferably, the coating is cured before or after step (b).

Preferably, the curing step is performed at a temperature of at least 100°C for at least 15 minutes.

The treatment in step (b) is preferably performed between 20 degrees Celsius (°C) and 500 °C and more preferably between 200 °C and 450 °C

The curing process may be advantageously used to remove a polymeric composition from the core by thermal degradation, thereby creating a hollow shell.

In another embodiment of this aspect of the invention, there is provided a method for producing a coated substrate, comprising the steps of:

(a) applying a coating composition comprising particles having a core and a shell, said shell comprising an inorganic oxide and said core is hollow, to a substrate;
(b) treating the coating with water vapour or a combination of water vapour and base to thereby produce a coated substrate defined by the expression:

$R_u$ equals less than 2.8$R_0$ and $R_r$ equals less than 2.0$R_0$

where,
$R_0$ is the specular reflection at 550 nm of the coating substrate applied to a substrate to form a coating having an average thickness of between 100 and 120 nm and stored at 25°C and 40% relative humidity under equilibrium conditions resulting in coating substrate $C_0$,
$R_u$ is the specular reflection at 550 nm of the coated substrate $C_0$ stored at 25°C and 90% relative humidity for 400 minutes resulting in coated substrate $C_1$; and $R_r$ is the specular reflection at 550 nm of the coated substrate $C_1$ after being stored at 25°C and 40% relative humidity until equilibrium conditions are reached.

The coating is preferably cured, either before or after step (b).

The present invention further relates to the use of a water vapour or a combination of water vapour and base for the treatment of a porous inorganic coating comprising particles comprising a core which is hollow or comprising an organic polymer composition and a shell comprising inorganic oxide.

It is thought that the steam curing process re-deposits silica to minimise the surface energy of the particle, with the number of enlarged pores relating to how a particle's surface energy is minimised.

It will be appreciated by those skilled in the art, that the position and number of enlarged pores may also be Influenced by controlling the exposure of particle to the steam curing process of the present invention. For example, a single enlarged pore may be produced by exposing a portion of a spherical particle to the steam curing process, as is achieved through the steam curing of particles forming a surface layer of a coating. Multiple pores may be produced by exposing a whole non-spherical particle (e.g. ellipsoidal) to the steam curing process of the present invention.

Preferably the particles have in the range of one to two enlarged pores. In an exemplary embodiment the particles have no more than one enlarged one.

The particles may be formed during the curing of the coating as previously described or the particles may formed through exposure of discrete particles to steam curing, for example in a reactor, such as a fluidized bed reactor.

A further aspect of the invention relates to a composition of core shell particles comprising the abovementioned particles in which at least 30%, more preferably at least 50%, even more preferably at least 80% and most preferably at least 90% of the particles have between one and five enlarged pores (determined using AFM over a 2 $\mu$m x 2 $\mu$m surface area).

In a further aspect of the present invention there is provided a method for producing a porous coating, the method comprising:

> (a) applying a coating composition comprising an inorganic oxide to a substrate;
> (b) curing the coating; and
> (c) treating the cured coating with water vapour or a combination of water vapour and base,
> wherein the coating composition comprises hollow particles (or nanoparticles).

The coatings obtained by this method have improved stain resistance compared to conventional coatings comprising hollow particles.

An enlarged pore, for the purposes of the present invention means a pore of between 5 nm and 300 nm which is enlarged in comparison to the median pore size diameter (determined with the use of an AFM over a 2 $\mu$m x 2 $\mu$m surface area) of the other pores, if any, in the shell. (i.e. the largest pores). The size of the all enlarged pores is preferably outside the population distribution of the non-enlarged pores, i.e. there are between one and five pores which are larger than the pores in the shell before steam curing is applied. Preferably, the enlarged pore(s) is at least 2 times the median pore diameter, more preferably at least 5 times the median pore diameter, even more preferably at least 10 times the median pore diameter and most preferably at least 30 times the median pore diameter.

Throughout the description and claims of this specification, the words "comprise" and "contain" and variations of the words, for example "comprising" and "comprises", means "including but not limited to", and is not intended to (and does not) exclude other moieties, additives, components, integers or steps.

Unless otherwise stated, particle parameters are average values based upon the analysis of at least 20 particles.

Shell thickness is determined by calculating the average thickness (using transmission electron microscopy (TEM)) of the shell from a cross section, ignoring discontinuous portions of the shell which may, for example, relate to enlarged pores.

Core shell particles means particles having a core and a shell.

Pore diameter is preferably calculated by software associated with the AFM.

Reflection, unless otherwise stated means specular reflection at 550 nm measured at 85° angle to a surface.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described In conjunction with a particular aspect, embodiment or example of the invention are to be understood to be applicable to any other aspect, embodiment or example described herein unless incompatible therewith.

## BRIEF DESCRIPTION OF THE FIGURES

> Figure 1 is a graph showing the ratio of the specular reflection at 550 nm (R) of a coating of the present invention stored under the conditions described in Test 2 relative to the specular reflection at 550 nm of the coatings stored at 25°C and 40% relative humidity under equilibrium conditions (R(0))
Figure 2 Is an AFM image of a coating surface prior to steam treatment;
Figure 3 is a two dimensional AFM image of the coating surface of a coating of the present invention.
Figure 4 is a three dimensional AFM image of the coating surface of the coating of Figure 3.

COATING COMPOSITION

The present invention comprises applying a coating composition comprising core shell particles to a substrate, wherein the shell comprises an inorganic oxide and the core is hollow or comprises an organic polymeric composition.

Coating compositions herein typically comprise a binder. The primary function of the binder is to keep the integrity of the coating intact. Any suitable binder may be used but preferably the binder forms covalent bonds with itself upon curing and/or other components in the coating and/or the substrate. The binder - before curing - preferably comprises inorganic compounds with alkyl or alkoxy groups. Further, the binder preferably polymerises itself to form a substantially continuous polymeric network. The binder is preferably structurally and/or chemically distinct from the shell.

In one embodiment of the invention the binder comprises an inorganic material. Preferably the binder consists substantially of an inorganic material. The binder preferably comprises compounds derived from one or more inorganic oxides. Preferably the binder comprises hydrolysable material such as inorganic alkoxides, inorganic halogenides, inorganic nitrates, inorganic acetates or a combination thereof. Preferred are inorganic alkoxides. Preferably the binder comprises alkoxy silanes, alkoxy zirconates, alkoxy aluminates, alkoxy titanates, alkyl silicates, aluminium nitrates, sodium silicates, or a combination thereof. Preferred are alkoxy silanes, preferably tri- and tetra- alkoxy silanes. Preferably, ethyl silicate, aluminate, zirconate, and/or titanate binders are used. Tetra alkoxy silane is most preferred.

The amount of binder in the coating composition Is preferably 1% or more, more preferably 2% or more, by weight of the solid fraction. Preferably the amount of binder will be 40% or less, more preferably 25% or less, by weight of the solid fraction. The percentage is calculated as the amount of inorganic oxide in the binder relative to the amount of inorganic oxide in the rest of the coating.

The particles may comprise a mixture of different types, sizes, and shapes of particles. However, preferably the particles are substantially the same size and shape. The particle size distribution, as measured by its polydispersity index using Dynamic Light Scattering (DLS), is preferably less than 0.5, preferably less than 0.3, and most preferably less than 0.1.

In one embodiment the particles used herein are non-spherical such as, preferably, rod-like or worm-like particles. In another preferred embodiment the particles are substantially spherical.

Preferably the particles have an average specific size g where g = ½ x (length + width) of about 500 nm or less, more preferably 300 nm or less and even more preferably 150 nm or less. The length is the maximum length possible, with the width being the maximum width measured at right angles to the line defining the length.

Preferably the particles have an average size of 1 nm or more. More preferably the particles have an average size of about 10 nm or more and even more preferably 50 nm or more. Particle size is measured by TEM.

Preferably the average specific diameter of the hollow core or void, when present, is 5 nm or more, more preferably 10 nm or more, even more preferably 20 nm or more. The average specific diameter of the void is preferably 500 nm or less, more preferably 100 nm or less, even more preferably 80 nm or less and yet even more preferably 70 nm or less. Preferably the shell is at least 1 nm thick, more preferably at least 2 nm, more preferably at least 5 nm, even more preferably at least 10 nm. The shell is 75 nm thick or less, preferably 50 nm or less, more preferably 25 nm or less and even more preferably 20 nm or less. Particles with a lower shell thickness have reduced mechanical properties while the formation of enlarged pores is more difficult in particles with a higher shell thickness.

In a preferred embodiment the void percentage, relative to the total volume of the particle (i.e. core and shell), is preferably from about 5% to about 90%, more preferably from about 10% to about 70%, even more preferably from about 25% to about 50%. The void precentage (x) may be calculated according to the following equation:

$$x = (4\,\pi\,r_a^3/3) \div (4\,\pi\,r_b^3/3) \times 100$$

wherein $r_a$ is the radius of the core and $r_b$ is the radius of the outer shell.

The shell of the core shell particle comprises an inorganic oxide. Preferably the shell consist essentially of an inorganic oxide. Preferably the metal is selected from magnesium, calcium, strontium, barium, borium, aluminium, gallium, indium, tallium, silicon, germanium, tin, antimony, bismuth, lanthanoids, actinoids, scandium, yttrium, titanium, zirconium, hafnium, vanadium, niobium, tantalum, chromium, molybdenum, tungsten, manganese, rhenium, iron, ruthenium, cobalt, nickel, copper, zinc, cadmium, and combinations thereof. Preferably the metal oxide is selected from titanium dioxide, zirconium oxide, antimony doped tin oxide, tin oxide, aluminium oxide, silicon dioxide, and combinations thereof. Preferably the shell comprises silica, more preferably at least 90%, by weight, silica. In a special embodiment, the particles consist of silica. Suitable shells, not containing the enlarged pores, are described in WO2008/028640 and WO2008/028641.

The organic polymer composition of the core comprises homopolymers, random co-polymers, block-copolymers, diblock-copolymers, triblock-copolymers, and combinations thereof.

Preferably the core comprises a polymer selected from polyesters, polyamides, polycarbonates, polyurethanes, vinyl polymers such as polystyrenes, poly(meth)acrylates and combinations thereof.

Other suitable polymers are listed in WO2008/028640 on page 5, line 31 to page 7, line 5.

In a preferred embodiment, the core material comprises a cationic polymer. The cationic group may be incorporated in the polymer or may be added in any other form such as, for example, by the addition of a cationic surfactant. Preferably the cationic groups are at least partially bound to the polymer. Preferably the cationic groups are incorporated into the polymer during polymerisation.

Preferably, the polymer comprises latex, such as NeoCryl™ XK-30*, available from DSM NeoResins B.V. As used herein, the term 'lastex' refers to stabilized suspension of polymeric particles. Preferably the suspension is an emulsion.

Preferably the latex comprises polymer and a cationic surfactant. Preferably, the surfactant comprises an ammonium surfactant.

Any suitable polymer may be used such as, for example, homopolymers, random co-polymers, block-copolymers, diblock-copolymers, triblock-copolymers, and combinations thereof.

The latex preferably comprises an aqueous cationic vinyl polymer. Most preferably, the latex comprises a vinyl polymer obtainable from monomers selected from at least styrenic monomers, (meth)acrylic monomers, cationic functionalized monomers and potentially cationic monomers or combinations thereof.

The compositions herein may comprise a solvent. Preferred solvents include water, organic solvents, and combinations thereof. However, depending on the chemistry of the binder, many solvents are useful. Suitable solvents include water, non-protic organic solvents, alcohols, and combinations thereof. Examples of suitable solvents include isopropanol, ethanol, acetone, ethylcellosolve, methanol, propanol, butanol, ethyleneglycol, propyleneglycol, methyl-ethyl-ether, methyl-butyl-ether, toluene, methyl-ethylketone, and combinations thereof.

Generally, the coating composition comprises an amount of nonreactive solvent to adjust the viscosity of the particles and binder to such a value that thin layers can be applied to the substrate. Preferably, the viscosity will be about 2.0 mPa.s or more, preferably 2.2 mPa.s or more, even more preferably about 2.4 mPa.s or more. Preferably, the viscosity is about 20 mPa.s or less, preferably about 10 mPa.s or less, more preferably about 6 mPa.s or less, and even more preferably about 3 mPa.s or less. The viscosity can be measured with an Ubbelohde PSL ASTM IP no 1 (type 27042).

Preferably, before curing, the amount of solids in the coating compositions herein is about 5% by weight or less, more preferably about 4%, by weight, or less, even more preferred about 3%, by weight, or less. Preferably the amount of solids is about 0.5%, by weight, or more, more preferably about 1%, by weight, or more, more preferably about 1.5%, by weight, or more.

The present compositions are suitable for forming optical coatings. As used herein, the term "optical coatings" refers to coatings with an optical function as major functionality. Examples of optical coatings include those designed for anti-reflective, anti-glare, anti-dazzle, anti-static, EM-control (e.g. UV-control, solar-control, IR-control, RF-control etc.) functionalities.

Preferably, the present coatings are anti-reflective. More preferably the present coatings have a degree of anti-reflective properties such that when measured for one coated side at a wavelength between 425 and 675 nm (the visible light region), the minimum reflection is about 2% or less, preferably about 1.5% or less, more preferably about 1% or less. The average reflection at one side, over the region of 425 to 675 nm will preferably be about 2.5% or less, more preferably about 2% or less, even more preferably about 1.5% or less, still more preferably about 1 % or less. Generally, the minimum in the reflection will be at a wavelength between 425 and 650 nm, preferably at a wavelength of 450 nm or higher, and more preferably at 500 nm or higher. Preferably, minimum is at a wavelength of 600 nm or lower. The optimal wavelength for the human eye is a minimum reflection around 550 nm as this is the wavelength (colour) at which the human eye is most sensitive.

Preferably, the refractive index of the coating composition is between 1.20 and 1.40 and more preferably between 1.25 and 1.35.

The coating composition can be applied to a substrate. Any suitable substrate may be used. Preferred are substrates that may benefit from an optical coating especially those that would benefit from an anti-reflective coating. The substrate preferably has a high transparency. Preferably the transparency is about 94% or higher at 2 mm thickness and at wavelength between 425 and 675 nm, more preferably about 96% or higher, even more preferably about 97% or higher, even more preferably about 98% or higher.

The substrate herein may be organic. For example, the substrate may be an organic polymeric such as polyethylene naphthalate (PEN), polycarbonate or polymethylmethacrylate (PMMA), polyester, or polymeric material with similar optical properties. In this embodiment, it Is preferred to use a coating that can be cured at temperatures sufficiently low that the organic substrate material remains substantially in its shape and does not suffer substantially due to thermal degradation. One preferred method is to use a catalyst as described in EP-A-1591804. Another preferred method of cure is described in WO 2005/049757.

The substrate herein may be inorganic. Preferred Inorganic substrates include ceramics, cermets, glass, quartz, or combinations thereof. Preferred is float glass. Most preferred is low-iron glass, so-called white glass, of a transparency of 98% or higher.

Preferably the coating composition is applied to the article so that the resultant dry coating thickness is about 50 nm or greater, preferably about 70 nm or greater, more preferably about 90 nm or greater. Preferably the dry coating thickness is about 300 nm or less, more preferably about 200 nm or less, even more preferably about 160 nm or less, still more preferably about 140 nm or less.

Preferably the substrate is cleaned before the coating is applied. Small amounts of contaminants such as dust, grease and other organic compounds cause the coatings to show defects.

A number of methods are available to apply coatings on substrates. Any method of applying a wet coating composition suitable for obtaining the required thickness would be acceptable. Preferred methods include meniscus (kiss) coating, spray coating, roll coating, spin coating, and dip coating. Dip coating is preferred, as it provides a coating on all sides of the substrate that is immersed, and gives a repeatable and constant thickness. Spin coating can easily be used if smaller glass plates are used, such as ones with 20 cm or less in width or length. Meniscus, roll, and spray coating is useful for continuous processes.

Once applied to the substrate the coating may require curing. The curing may be carried out by any suitable means which is often determined by the type of binder material used. Examples of means of curing include heating, IR treatment, exposure to UV radiation, catalytic curing, and combinations thereof.

If a catalyst is used it is preferably an acid catalyst. Suitable catalysts include organic acids like acetic acid, formic acid, nitric acid, citric acid, tartaric acid, inorganic acids like phosphoric acid, hydrochloric acid, sulphuric acid, and mixtures thereof, although acid with buffer capacity are preferred.

In a preferred embodiment the curing is achieved by heating. Curing may be performed as low as room temperature (e.g. 20 °C) although it is generally carried out at about 150°C or more, preferably about 200°C or more. Preferably, the temperature will be about 7000°C or less, more preferably about 500°C or less. Curing generally takes place in 30 seconds or more. Generally, curing is performed in 10 hours or less, preferably 4 hours or less.

In one embodiment, the coating composition is heat-curable and is applied to a glass plate before a tempering step of said plate. The tempering step is usually carried out at temperature of up to 600°C. In this case the curing and tempering process are thus carried out in one step.

In one embodiment, after curing the coating treated with water vapour or a combination of water vapour and base. In an alternative embodiment, the coating is treated with water vapour or a combination of water vapour and base prior to curing.

The water vapour (steam) may be applied to the coating by any suitable means. Preferably the water vapour Is added at a temperature of at least 100°C, more preferably at least 150°C, even more preferably at least 200°C, yet even more preferably at least 300°C and most preferably at least 400°C. Preferably the steam treatment temperature is no more than 600°C and more preferably no more than 500°C. Conveniently the water vapour can be added after the optional curing step while the oven is still hot.

The water vapour treatment preferably continues for at least 1 minute, more preferably at least 15 minutes, even more preferably at least 45 minutes. The duration of the treatment is preferably controlled to achieve a desired enlarged pore size.

The base may be applied to the coating by any suitable means. In a preferred embodiment, the base is added in a gaseous form. In a second preferred embodiment, a pH neutral compound that can liberate a base at higher temperature is embedded in the coating. Any suitable base may be used. Preferred bases include ammonia, primary amines, secondary amines, tertiary amines, metal hydroxides, pyridine, metal amides, primary phosphines, secondary phosphines, tertiary phosphines, primary arsanes, secondary arsanes, tertiary arsanes or a combination thereof. The base may also be derived from any suitable pH neutral compound that can liberate a base, for example, when subjected to higher temperatures. Preferably, the pH neutral compound to be used in the present invention comprises a labile protecting group ($P_g$) and a base (B) which is covalently linked.

Preferably, the labile protecting group ($P_g$) is selected from carbobenzyloxy (Cbz), *tert*-butyloxycarbonyl (BOC), 9-fluorenylmethyloxycarbonyl (Fmoc), benzyl (Bn), *p*-methoxyphenyl (PMP), ($\alpha,\alpha$-dimethyl-3,5-dimethoxybenzyloxy) carbonyl (Ddz), ($\alpha,\alpha$-dimethyl-benzyloxy)carbonyl, phenyloxycarbonyl, *p*-nitrophenyloxycarbonyl, alkylboranes, alkylaryl boranes, arylboranes or any other suitable protecting group.

The base (B) to be used in the pH neutral compound can suitably be selected from primary, secondary or tertiary aryl- or alkylamino compounds, aryl or alkyl phosphino compounds, alkyl- or arylarsino compounds or any other suitable other compound.

During the steam treatment the concentration of water in the environment of the coating is preferably more than 1 gram per cubic meter, more preferably more than 5 gram per cubic meter, most preferably more than 10 gram per cubic meter. During the steam treatment, the concentration of water is preferably less than 1000 gram per cubic meter, more preferably less than 750 gram per cubic meter, most preferably less than 500 gram per cubic meter.

During the steam treatment with a combination of water vapour and base, the concentration of base is preferably more than 0.00001 gram per cubic meter, more preferably more than 0.0001 gram per cubic meter, most preferably more than 0.001 gram per cubic meter. During the steam treatment with a combination of water vapour and base, the concentration of base is preferably less than 1 gram per cubic meter, more preferably less than 0.1 gram per cubic meter, most preferably less than 0.01 gram per cubic meter.

The mechanism by which the water vapour and combined water vapour and base treatment improves the properties of the coating is not entirely understood. However, it does not appear that the base is acting as a curing catalyst and the effect is most evident after the coating is already cured. While not wishing to be bound by theory it is believed that the steam treatment causes a surface rearrangement of the coating which creates a small number of enlarged pores, which enables water more readily released, while still maintaining a barrier to solid contamination. This leads to a reduction of staining and aids cleanability.

It has been found that the coatings according to the present invention show good optical properties and cleanability.

The coated substrates of the present invention, after immersion in water, as described in test 1, have an increase in reflection of preferably no more than 40%, more preferably no more than 30% and even more preferably no more than 20% after 45 minutes drying under ambient conditions (i.e. 25°C @ 40% relative humidity) after the coating is immersed in deionised water for 15 minutes at room temperature.

The invention will now be further illustrated, though without in any way limiting the scope of the disclosure, by reference to the following examples.

EXAMPLES

Example 1 - Composition of formulation (in weight-%):

| 2-propanol | 90.5 |
| Water | 5.0 |
| $SiO_2(OH)$ | 1.6 |
| Ethanol | 1.4 |
| Methanol | 0.7 |
| NeoCryl™ XK-30* | 0.5 |
| Acetic acid | 0.2 |
| Nitric acid | 0.1 |

Core shell particles were produced using latex (NeoCryl XK-30 - available from DSM NeoResins BV) and tetramethoxysilane according to the method disclosed in WO2009/03070 and in particular page 6, lines 8 to 29, with the resultant silica shell, latex core particles having the following properties:

| pH after dilution with ethanol: | 5.7 |
| Particle size of latex in water (determined by DLS): | 63 nm |
| Particle size of core-shell particle in water (determined by DLS): | 79 nm |
| Particle size of core-shell particle in ethanol (determined by DLS): | 108 nm |
| Polydispersity: | <0.1 |
| Isoelectric point: | 4 to 5 |
| Particle size core-shell after drying (determined by TEM) | 55 nm |
| Shell thickness after drying (determined by TEM) | 10 nm |

Nitric acid was then added to a pH of 3.6. The particle size was stable at 84 nm for at least two weeks.

Coating process: The coatings were applied to 10 x 10 cm$^2$ glass plates (2 mm thickness, Guardian Extra Clear Plus) via dip-coating. 10 mm per second was chosen as appropriate dip speed using the coating formulation as described above. A coating thickness of 120 nm was achieved.

Curing process: The coated glass substrates were heated to 450°C (heating rate of 900°C per hour) then kept at 450°C for 15 minutes. The oven was then cooled to room temperature to complete the curing process (cooling rate of 300°C per hour).

Steam treatment:

(a) with water vapour: coated articles cured according to the procedure as described above were treated with water vapour at 450°C for 60 minutes. Water vapour was pumped through the oven (V = 0.018 m$^3$) at an addition rate of water of 4 gram per minute.

(b) with a combination of water vapour and ammonia: coated articles cured according to the procedure as described above were treated with water vapour and ammonia at 450°C for 30 minutes. Water vapour was pumped through the oven (V = 0.018 m$^3$) at an addition rate of 4 gram per minute. Ammonia was pumped through the oven at an addition rate of 0.020 gram per minute.

Test 1: Immersion in water at room temperature

The coated substrates were immersed in deionised water at room temperature. The specular reflection at 550 nm was measured before immersion and after 1 minute and 15 minutes of immersion time. After 15 minutes immersion, the coated substrates were allowed to dry under ambient conditions for a period of 45 minutes. After this drying time, the reflection of the coated substrates was determined again. Then, the substrates were heated to 100°C for 5 minutes. The reflection was determined after the heating step. The results are depicted in Table 1.

Table 1. Immersion test results (reflection (R) minimum in %).

|  | $R$ before Immersion | $R$ after 1 min immersion | $R$ after 15 min immersion | $R$ after 45 min drying | $R$ after heating |
|---|---|---|---|---|---|
| No post-cure treatment | 0.55 | 3.2 | 2.8 | 2.7 | 0.55 |
| Post-cure treatment with water vapour | 0.52 | 0.63 | 0.70 | 0.66 | 0.50 |
| Post-cure treatment with water vapour and base | 0.48 | 0.56 | 0.52 | 0.52 | 0.48 |

As illustrated in table 1, water uptake leads to an increase of refractive index of the coating and consequently to an increase in reflection. The results clearly show a reduction in specular reflection at 550 nm of the coating upon steam treatment with water vapour or with a combination of water vapour and base.

Test 2: Exposure to high relative humidity

The coated substrates were positioned in a climate chamber at 25°C and 40% relative humidity. Then, the humidity level was increased to 90%. The coatings were left to equilibrate for about 400 minutes under these conditions. During this equilibration period, the reflection was measured. After equilibration, the humidity was decreased to 40%. The coated substrates were allowed to equilibrate for about 600 minutes In this atmosphere. At the end of this equilibration period, the reflection was measured. At the end of the experiment, the coated articles were heated to 100°C for 5 minutes. The reflection was determined after the heating step. All reflection values are normed with the starting reflection at 40% humidity and 25°C.

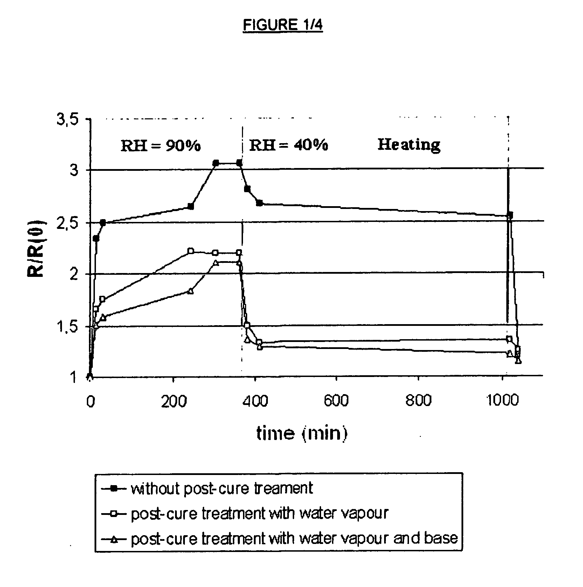

The results illustrated in Figure 1 clearly show that the treated coatings have a reduced specular reflection at 550 nm indicative of the coatings having a reduced water uptake and an Increased water release.

Visual observations confirmed that coating comprising the particles of the present invention were free of water stains. In contrast, coating comprising particles without the enlarged pores were more prone to exhibiting water stains.

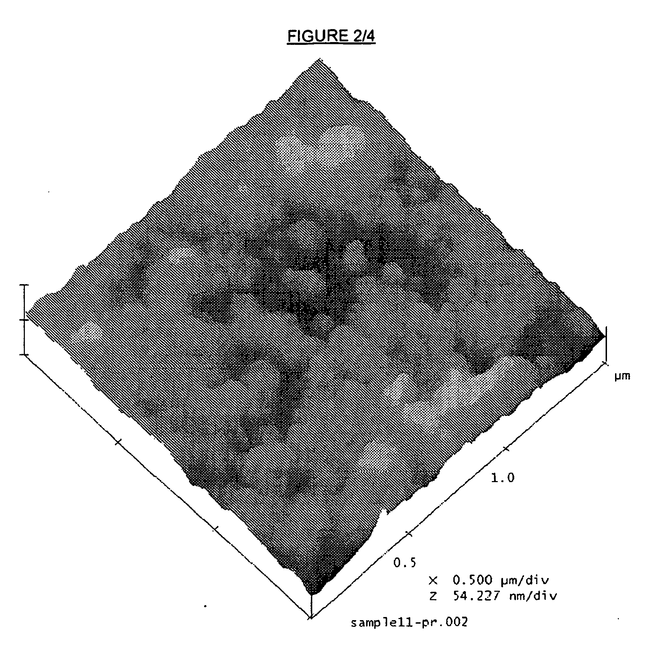

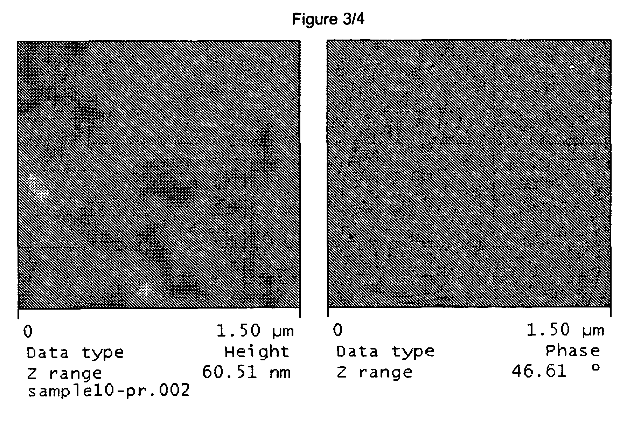

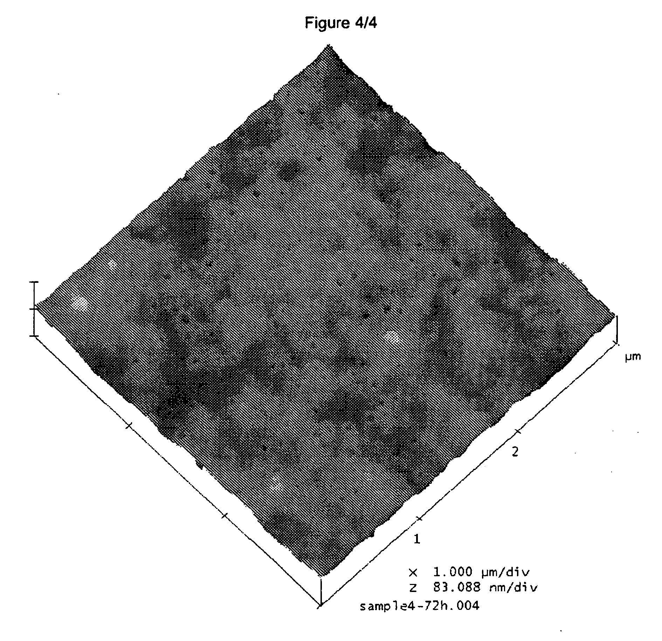

Figures 3 to 4 illustrate the surface of the coating of example 1 in which the particles of about 40 to 100 nm diameter, each comprises one enlarged pore of about 20 to 50 nm diameter. Prior to the steam treatment (Figure 2), no visual pores were detected from the atomic force microscopy (AFM) image, indicating that the non- ' enlarged pores were less than 1 nm.

**Claims**

1.  Particles each having a core, which is hollow or comprises an organic polymer composition, and a shell comprising an inorganic oxide, wherein the shell has:

    a. a thickness in the range from 2 to 75 nm; and
    b. at least one and no more than five pores, each pore communicating between the core and an outer surface of the shell, and having a diameter of between 5 nm and 300 nm measured using an atomic force microscope, said pores being the largest pores of the particle.

2.  The particles according to claim 1, wherein the pore diameter is at least 15 nm.

3.  The particles according to claim 1 or 2, wherein the particles have a maximum diameter of no more than 500 nm.

4.  The particles according to any one of the preceding claims, wherein the inorganic oxide comprises silica.

5.  A coating comprising particles according to any one of the preceding claims, wherein a portion of the particles forms at least part of a coating surface.

6.  The coating according to claim 5, wherein at least 30% of the particles which form part of the coating surface comprise said pores.

7.  The coating according to claim 5 or 6, wherein the particles which form at least part of the coating surface comprise, on average greater than 0.3 and no more than 2.0 enlarged pores determined using atomic force microscopy over a 2 $\mu$m x 2 $\mu$m surface area.

8.  The coating according to any one of claims 5 to 7, wherein the coating is an anti-reflective coating.

9.  The coating according to claim 5 or 6, wherein the core is hollow and the coating is an anti-reflective coating defined by the expression:

    $R_u$ equals less than $2.8R_0$: and R, equals less than $2.0R_0$ where,
    $R_0$ is the specular reflection at 550 nm of the coating composition applied to a substrate to form a coating having an average thickness of between 100 and 120 nm and stored at 25°C and 40% relative humidity under equilibrium conditions resulting in coated substrate $C_0$,
    $R_u$ is the specular reflection at 550 nm of the coated substrate $C_0$ stored at 25°C and 90% relative humidity for 400 minutes resulting in coated substrate $C_1$; and
    R, is the specular reflection at 550 nm of the coated substrate $C_1$ after being stored at 25°C and 40% relative humidity until equilibrium conditions are reached.

10. An article comprising the coating according to any one of claims 5 to 9.

11. A method for producing a coated substrate comprising the coating according to any one of claims 5 to 9 comprising the steps of:

    a. applying a coating composition comprising particles having a core and a shell to a substrate, said shell having a thickness in the range of 2 to 75 nm; and
    b. treating the coating surface with water vapour or a combination of water vapour and a base,

wherein said core comprises an organic polymer composition or is hollow and said shell comprises an inorganic oxide.

**12.** The method according to claim 11, wherein the coating composition is cured before or after step (b).

**13.** The method according to claim 12, wherein the curing step is performed at a temperature of at least 100°C for at least 15 minutes.

**14.** Use of water vapour or a combination of water vapour and a base in the preparation of the particles according to any one of claims 1 to 4.

**Patentansprüche**

**1.** Partikel mit jeweils einem Kern, der hohl ist oder eine Zusammensetzung aus organischem Polymer umfasst, und einem Mantel, der ein anorganisches Oxid umfasst, wobei der Mantel Folgendes aufweist:

a. eine Dicke im Bereich von 2 bis 75 nm und
b. mindestens eine und nicht mehr als fünf Poren, wobei jede Pore den Kern und eine äußere Oberfläche des Mantels verbindet und einen Durchmesser zwischen 5 nm und 300 nm aufweist, gemessen unter Verwendung eines Rasterkraftmikroskops, wobei die Poren die größten Poren des Partikels sind.

**2.** Partikel nach Anspruch 1, wobei der Porendurchmesser mindestens 15 nm beträgt.

**3.** Partikel nach Anspruch 1 oder 2, wobei die Partikel einen maximalen Durchmesser von nicht mehr als 500 nm aufweisen.

**4.** Partikel nach einem der vorhergehenden Ansprüche, wobei das anorganische Oxid Siliziumdioxid umfasst.

**5.** Beschichtung, die Partikel nach einem der vorhergehenden Ansprüche umfasst, wobei ein Anteil der Partikel mindestens einen Teil einer Beschichtungsoberfläche bildet.

**6.** Beschichtung nach Anspruch 5, wobei mindesten 30 % der Partikel, die einen Teil der Beschichtungsoberfläche bilden, die Poren umfassen.

**7.** Beschichtung nach Anspruch 5 oder 6, wobei die Partikel, die mindestens einen Teil der Beschichtungsoberfläche bilden, in einem Oberflächenbereich von 2 $\mu$m x 2 $\mu$m durchschnittlich mehr als 0,3 und nicht mehr als 2,0 vergrößerte Poren umfassen, bestimmt unter Verwendung von Rasterkraftmikroskopie.

**8.** Beschichtung nach einem der Ansprüche 5 bis 7, wobei die Beschichtung eine antireflektive Beschichtung ist.

**9.** Beschichtung nach Anspruch 5 oder 6, wobei der Kern hohl ist und die Beschichtung eine antireflektive Beschichtung ist, die durch folgenden Ausdruck definiert ist:

$R_u$ ist kleiner als 2,8 $R_0$ und $R_r$ ist kleiner als 2,0 $R_0$,
wobei
$R_0$ die gerichtete Reflexion bei 550 nm der Beschichtungszusammensetzung ist, die auf ein Substrat aufgebracht ist, um eine Beschichtung zu bilden, die eine durchschnittliche Dicke von 100 bis 120 nm aufweist, und bei 25 °C und 40 % relativer Luftfeuchte unter Gleichgewichtsbedingungen gelagert ist, woraus ein beschichtetes Substrat $C_0$ entsteht,
$R_u$ die gerichtete Reflexion bei 550 nm des beschichteten Substrats $C_0$ ist, das 400 Minuten bei 25°C und 90 % relativer Luftfeuchte gelagert ist, woraus ein beschichtetes Substrat $C_1$ entsteht, und
$R_r$ die gerichtete Reflexion bei 550 nm des beschichteten Substrats $C_1$ ist, nachdem es bei 25°C und 40 % relativer Luftfeuchte gelagert wurde, bis Gleichgewichtsbedingungen erreicht werden.

**10.** Gegenstand, die Beschichtung nach einem der Ansprüche 5 bis 9 umfassend.

**11.** Verfahren zur Herstellung eines beschichteten Substrats, das die Beschichtung nach einem der Ansprüche 5 bis 9 umfasst, folgende Schritte umfassend:

a. Aufbringen einer Beschichtungszusammensetzung, die Partikel mit einem Kern und einem Mantel umfasst, auf ein Substrat, wobei der Mantel eine Dicke im Bereich von 2 bis 75 nm aufweist, und

b. Behandeln der Beschichtungsoberfläche mit Wasserdampf oder einer Kombination aus wasserdampf und einer Base,

wobei der Kern eine Zusammensetzung aus organischem Polymer umfasst oder hohl ist und der Mantel ein anorganisches Oxid umfasst.

12. Verfahren nach Anspruch 11, wobei die Beschichtungszusammensetzung vor oder nach Schritt (b) gehärtet wird.

13. Verfahren nach Anspruch 12, wobei der Schritt des Härtens mindestens 15 Minuten lang bei einer Temperatur von mindestens 100 °C ausgeführt wird.

14. Verwendung von Wasserdampf oder einer Kombination aus Wasserdampf und einer Base bei der Herstellung der Partikel nach einem der Ansprüche 1 bis 4.

**Revendications**

1. Particules ayant chacune un coeur qui est creux ou qui comprend une composition polymère organique et une coquille comprenant un oxyde inorganique, la coquille ayant:

   a. une épaisseur dans la gamme de 2 à 75 nm; et

   b. au moins un et pas plus de cinq pores, chaque pore communicant entre le coeur et une surface extérieure de la coquille et ayant un diamètre compris entre 5 nm et 300 nm mesurés en utilisant un microscope à force atomique, lesdits pores étant les plus grands pores de la particule.

2. Particules selon la revendication 1, dans lesquelles le diamètre des pores est d'au moins 15 nm.

3. Particules selon la revendication 1 ou 2, les particules ayant un diamètre maximal ne dépassant pas 500 nm.

4. Particules selon l'une quelconque des revendications précédentes, dans lesquelles l'oxyde inorganique comprend de la silice.

5. Revêtement comprenant des particules selon l'une quelconque des revendications précédentes, une partie des particules formant au moins une partie d'une surface du revêtement.

6. Revêtement selon la revendication 5, dans lequel au moins 30 % des particules qui forment une partie de la surface du revêtement comprennent lesdits pores.

7. Revêtement selon la revendication 5 ou 6, dans lequel les particules qui forment au moins une partie de la surface du revêtement comprennent en moyenne plus de 0,3 et pas plus de 2,0 pores élargis déterminés en utilisant la microscopie à force atomique sur une zone de 2 $\mu$m x 2 $\mu$m de surface.

8. Revêtement selon l'une quelconque des revendications 5 à 7, le revêtement étant un revêtement antiréfléchissant.

9. Revêtement selon la revendication 5 ou 6, dans lequel le coeur est creux et le revêtement est un revêtement antiréfléchissant défini par l'expression:

   $R_u$ vaut moins de 2,8$R_0$, et $R_r$ vaut moins de 2,0$R_0$ où

   $R_0$ est la réflexion spéculaire à 550 nm de la composition de revêtement appliquée à un substrat pour former un revêtement ayant une épaisseur moyenne comprise entre 100 et 120 nm et conservée à 25°C et 40 % d'humidité relative dans des conditions d'équilibre pour obtenir un substrat revêtu $C_0$,

   $R_u$ est la réflexion spéculaire à 550 nm du substrat revêtu $C_0$ conservé à 25 °C et 90 % d'humidité relative pendant 400 minutes pour obtenir un substrat revêtu $C_1$, et

   $R_r$ est la réflexion spéculaire à 550 nm du substrat revêtu $C_1$ après avoir été conservé à 25 °C et 40 % d'humidité relative jusqu'à ce que des conditions d'équilibre soient atteintes.

**10.** Article comprenant le revêtement selon l'une quelconque des revendications 5 à 9.

**11.** Procédé pour fabriquer un substrat revêtu comprenant le revêtement selon l'une quelconque des revendications 5 à 9, comprenant les étapes consistant à :

a. appliquer une composition de revêtement comprenant des particules ayant un coeur et une coquille à un substrat, ladite coquille ayant une épaisseur dans la gamme de 2 à 75 nm ; et
b. traiter la surface du revêtement avec de la vapeur d'eau ou une combinaison de vapeur d'eau et d'une base,

dans lequel ledit coeur comprend une composition polymère organique ou est creux, et ladite coquille comprend un oxyde inorganique.

**12.** Procédé selon la revendication 11, dans lequel la composition de revêtement est durcie avant ou après l'étape (b).

**13.** Procédé selon la revendication 12, dans lequel l'étape de durcissement est exécutée à une température d'au moins 100 °C pendant au moins 15 minutes.

**14.** Utilisation de vapeur d'eau ou d'une combinaison de vapeur d'eau et d'une base dans la préparation des particules selon l'une quelconque des revendications 1 à 4.

FIGURE 1/4

Legend:
- without post-cure treament
- post-cure treatment with water vapour
- post-cure treatment with water vapour and base

FIGURE 2/4

X  0.500 µm/div
Z  54.227 nm/div

sample11-pr.002

µm

1.0

0.5

Figure 3/4

```
0                    1.50 μm    0                    1.50 μm
Data type           Height     Data type            Phase
Z range           60.51 nm     Z range            46.61  °
sample10-pr.002
```

Figure 4/4

X  1.000 µm/div
Z  83.088 nm/div
sample4-72h.004

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2432484 A
- US 6921578 B
- CA 449110, H. R. Moulton
- WO 2008028640 A
- WO 2008028641 A
- EP 1591804 A
- WO 2005049757 A
- WO 200903070 A

### Non-patent literature cited in the description

- **Wu et al.** Properties of sol-gel derived scratch resistant nano-porous silica films by a mixed atmospheric treatment. *Journal of Non-Crystalline Solids,* 2000, vol. 275, 169-174